# EUROPÄISCHE PATENTSCHRIFT

(11) **EP 1 771 274 B1**
(45) Veröffentlichungstag und Bekanntmachung des Hinweises auf die Patenterteilung: **18.03.2009**
(21) Anmeldenummer: 05772251.4
(22) Anmeldetag: 20.07.2005
(51) Int. Cl.: B23K 20/10, H01R 4/02, H01R 43/02

(54) **VERFAHREN ZUR HERSTELLUNG EINER SCHWEISSVERBINDUNG ZWISCHEN ELEKTRISCHEN LITZEN MIT EINEM TRÄGER**
METHOD FOR PRODUCING A WELDED JOINT BETWEEN ELECTRICAL WIRES WITH A SUPPORT
PROCEDE POUR REALISER UN ASSEMBLAGE PAR SOUDURE

(30) Priorität: 23.07.2004 DE 102004035953; 15.09.2004 DE 102004044480; 16.02.2005 DE 102005007161
(43) Veröffentlichungstag der Anmeldung: 11.04.2007
(73) Patentinhaber: SCHUNK Ultraschalltechnik GmbH, D-35435 Wettenberg (DE)
(72) Erfinder: STEINER, Ernst, 35452 Heuchelheim (DE); STROH, Dieter, 35435 Wettenberg (DE); THOMS, Enno, 35435 Wettenberg (DE)
(74) Vertreter: Stoffregen, Hans-Herbert
(86) Internationale Anmeldenummer: PCT/EP2005/007919
(87) Internationale Veröffentlichungsnummer: WO 2006/010551

(56) Entgegenhaltungen:
- EP-A- 0 286 975
- EP-A- 0 711 097
- DE-C- 3 437 749
- DE-C1- 3 719 083
- US-A1- 2002 028 612
- US-A1- 2004 088 857
- PATENT ABSTRACTS OF JAPAN Bd. 2000, Nr. 02, 29. Februar 2000 (2000-02-29) -& JP 11 317118 A (TOSHIBA CORP), 16. November 1999 (1999-11-16)

## Beschreibung

Die Erfindung bezieht sich auf ein Verfahren zum Herstellen einer Schweißverbindung zwischen elektrischen Leitern wie Litzen mit einem flächigen eigensteifen Träger wie einem elektrischen Anschlusselement oder einem Abschnitt eines solchen, insbesondere Abschnitt eines Erdungskontakts, Kontaktmessers oder Kabelschuhs Gemäβ dem Oberbegriff des Anspruchs 1 (siehe, z.B. DE 34 37 749 C).

Aus der DE-A-199 06 088 ist es bekannt, ein Batteriepolanschlusskabel mit einem Kontaktstück zu verschweißen, das im Schweißbereich in Draufsicht eine Trapezgeometrie aufweist. Das Kontaktstück und das Batteriepolanschlusskabel werden in einen Verdichtungsraum einer Ultraschallschweißvorrichtung eingebracht, der in Höhe und Breite herstellbar ist. Die die seitlichen Begrenzungen bildenden Seitenschieber sind jeweils in Richtung des Kontaktstücks verstellbar und müssen in an die schräg zueinander verlaufenden Längsseiten des Kontaktstücks eingepasst sein, um den Verdichtungsraum schließen zu können. Gesondert hierzu ist in den Verdichtungsraum ein Amboss eintauchbar.

Um auf einen Träger Litzen mittels Ultraschall aufzuschweißen, ist nach der DE-C-34 37 749 vorgesehen, dass die einen Verdichtungsraum seitlich begrenzenden Backen entlang des Trägers verstellbar sind, wobei der lichte Abstand der Backen auf die Breite eines in den Verdichtungsraum eintauchenden Abschnitts einer Sternsonotrode ausgerichtet wird.

Aus DE.Z.: Die Bibliothek der Technik, Band 108: Ultraschall-Metallschweißen, Verlag Moderne Industrie, 86895 Landsberg, 1995, Seite 43, ist es bekannt, einen im Schnitt eine U-förmige Geometrie aufweisenden Kabelschuh mit elektrischen Leitern mittels Ultraschall zu verschweißen. Hierzu sind Ultraschallschweißvorrichtungen bekannt, bei denen der Kabelschuh auf einer Gegenelektrode abgestützt wird. Seitlich zu dem Kabelschuh verschiebbar und sich entlang den Seitenschenkel erstreckend sind Begrenzungselemente angeordnet, zwischen denen eine Sonotrode, d. h. deren Sonotrodenkopf mit Schweißfläche in Richtung der Gegenelektrode absenkbar ist, um die Leiter mit dem Kabelschuh zu verschweißen. Um die Verstellbarkeit der Sonotrode sicherzustellen und Maßtoleranzen des Kabelschuhs zu berücksichtigen, verlaufen die Seitenbegrenzungen mit geringem Abstand entlang der Außenflächen der Seitenschenkel. Hierdurch bedingt können beim Schweißen auftretende Querkräfte dazu führen, dass die Seitenschenkel auseinander gebogen werden.

Nachteilig der bekannten Anordnung ist des Weiteren, dass das Füllvolumen durch die Höhe der Seitenschenkel des Kabelschuhs vorgegeben wird, wobei der Kabelschuh nur in einem Umfang mit zu verschweißenden Litzen gefüllt werden darf, dass beim Absenken der Sonotrode ausgeschlossen ist, dass Litzen aus dem Kabelschuh herausgedrückt werden können.

Zu den oben beschriebenen Verfahren zum mechanischen und elektrischen Verbinden elektrischer Leiter wie Litzen mit einem einen flachen oder U-förmigen Träger aufweisenden elektrischen Anschlusselement sind speziell für diesen Zweck ausgebildete Ultraschallschweißvorrichtungen notwendig. Zur Herstellung von Durchgangs- oder Endknoten von Litzen sind diese Ultraschallschweißvorrichtungen nicht geeignet. Dieses Problem zeigt sich insbesondere bei der Endmontage eines in einer Montagevorrichtung eingespannten kundenspezifischen Kabelbaums, bei dem unterschiedliche Litzenkombinationen sowie Anschlusselemente mit unterschiedlichen Flachträgem zum Einsatz kommen. Bei den Verfahren nach dem Stand der Technik können derartige Anforderungen nur durch einen kosten- und zeitaufwändigen Werkzeugtausch realisiert werden.

Ultraschallschweißvorrichtungen mit in Höhe und Breite verstellbarem Verdichtungsraum sind aus der EP-B-0 143 936 oder der DE-A-37 19 083 bekannt.

Der EP-A-0 286 975 ist eine Ultraschallschweißvorrichtung zu entnehmen, mit der Litzen untereinander verschweißt werden. Um einen die Litzen aufnehmenden Verdichtungsraum auf den Vorschritt des Verdichtens bzw. Verschweißens der Litzen auszulegen, wird der Verdichtungsraum von zueinander verstellbaren Flächen einer Sonotrode, eines Ambosses sowie zwei Schiebern begrenzt.

Ein Shomanschlusselement für eine beheizbare Autoglasscheibe ist aus der EP-A-0 711 097 bekannt. Dabei wird ein Ende eines Flachgewebebandes mit einem metallischen Reduzierstück und das andere Ende mit einem Lötfuß aus einem Kupferblechabschnitt verschweißt.

Zum Verschweißen von supraleitenden Leitern wird nach der JP-A-11317118 vorgeschlagen, dass diese zunächst in eine Vertiefung eines Ambosses eingebracht werden, in die sodann ein Abschnitt einer Sonotrode eintaucht, um das Verschweißen durchzuführen.

Die US-A-2004/0088857 sieht ein Verschweißen von Litzen mit einem Träger mittels Ultraschall vor. Zum Fixieren der Litzen kann eine Sonotrode einer Ultraschaschschweißvorrichtung eine nutartige Aussparung aufweisen, in die die Litzen eingebracht werden, um sodann mit dem Träger verschweißt zu werden.

Der vorliegenden Erfindung liegt die Aufgabe zu Grunde, ein Verfahren der eingangs genannten Art dahingehend weiterzubilden, dass Schweißverbindungen der eingangs erläuterten Art reproduzierbar mit hoher Güte und kostengünstig hergestellt werden können.

Ein Verfahren gemäß der Erfindung ist im Anspruch 1 definiert.

Abweichend vom vorbekannten Stand der Technik verläuft die aus dem flachen, im Querschnitt im Wesentlichen rechteckigen Träger und den elektrischen Leitern gebildete eine quaderförmige Geometrie aufweisende Einheit vollständig in dem Verdichtungsraum. Es kann somit ein Verdichten und Verschweißen mit aus dem Stand der Technik bisher nur zum Verschweißen von Durchgangs- und Endknoten verwendeten Ultraschallschweißmaschinen erfolgen. Dadurch wird erreicht, dass zur Endmontage eines kundenspezifischen Kabelbaums mit unterschiedlichen Litzenkombinationen sowie Anschlusselementen mit unterschiedliche Querschnitte aufweisenden Trägern ein Werkzeugtausch nicht notwendig ist Der Verdichtungsraum kann problemlos stufenlos an die aus flachem Träger und elektrischen Leitern gebildete Einheit angepasst werden.

Als Träger kann ein eben flächiges oder gekrümmt flächiges Element verwendet werden. Die Litze kann vorverdichtet oder nicht vorverdichtet in den Verdichtungsraum eingebracht werden. Ersteres ist dann von Vorteil, wenn die Litze an gewünschter Position auf den Träger verschweißt werden soll bzw. einen kleinen Gesamtquerschnitt aufweisen.

Insbesondere durch die Abstimmung des Abstandes der dritten und vierten Begrenzungsflächen zueinander, also der Begrenzungselemente und somit der Breite des Verdichtungsraums ist sichergestellt, dass die Litzen im erforderlichen Umfang mit dem Träger verschweißt werden, ohne dass die Gefahr besteht, dass Litzen seitlich herausgedrückt werden. Dabei ist das Einlegen der Litzen problemlos durchführbar, da der Verdichtungsraum im Bodenbereich, auf den die Litzen gelegt werden, umfangsseitig geschlossen ist, also quasi eine rinnen- oder kanalförmige Aufnahme bei entfernter oder weitgehend entfernter Gegenelektrode bildet und frei zugänglich ist.

Um eine besonders feste Schweißverbindung zu ermöglichen, wobei gleichzeitig sichergestellt ist, dass beim Stromdurchgang unerwünschte Erwärmungen nicht auftreten, sieht eine hervorzuhebende Ausgestaltung der Erfindung vor, dass in den Verdichtungsraum Leiter mit einem Gesamtquerschnitt eingebracht werden, dass Querschnitt der verdichteten und mit dem Träger verschweißten Leiter gleich oder in etwa gleich Querschnitt des Trägers ist.

Auch zeichnet sich die Erfindung dadurch aus, dass anschließend das entlang der ersten Begrenzungsfläche verstellbare erste Begrenzungselement entweder an zugewandten Längsseitenrand des Trägers angefahren wird, wobei gegenüberliegender Längsseitenrand des Trägers an der vierten Begrenzungsfläche anliegt, oder bis auf einen Abstand zwischen der dritten Begrenzungsfläche zu der vierten Begrenzungsfläche verstellt wird, der gleich oder geringfügig kleiner als lichter Abstand zwischen den Längsseitenrändern des Trägers ist.

Insbesondere zeichnet sich die Erfindung durch folgende Verfahrensschritte aus:
- Verschieben des ersten Begrenzungselementes in Richtung des zweiten Begrenzungselementes bis auf einen Abstand b zwischen der dritten und vierten Begrenzungsfläche, wobei der Abstand b auf lichten Abstand zwischen den Längsseitenrändern des Trägers abgestimmt wird,
   - Kompaktieren der Leiter zwischen dem Träger und der ersten Elektrode durch Absenken der Gegenelektrode auf den Träger und Kraflbeaufschlagen des Trägers in Richtung der ersten Elektrode,
   - Bestimmung der Höhe oder Breite oder zumindest einer anderen charakteristischen Größe des Verdichtungsraums nach Abschluss der Kompaktierung,
   - Abrufen von abgelegten Schweißparametern unter Zugrundelegung der Höhe der Breite bzw. der charakteristischen Größe des Verdichtungsraums,
   - Verschweißung der kompaktierten Leiter mit dem Träger bei gleichzeitiger Veränderung des Abstands zwischen der ersten Elektrode und der zweiten Elektrode,
   - Öffnen des Verdichtungsraums durch Anheben der zweiten Elektrode und Beabstanden des ersten Begrenzungselements zu dem zweiten Begrenzungselement und
   - Entfernen der aus den mit dem Träger verschweißten Leiter gebildeten Schweißverbindung aus dem Verdichtungsraum.

Eine weitere bevorzugte Verfahrensweise sieht vor, dass die Schweißparameter in Abhängigkeit des Querschnitts Q_{T} des flachen Trägers und des Querschnitts Q_{L} der elektrischen Leiter bestimmt bzw. ausgewählt werden.

Das obige Verfahren erlaubt die Verwendung eines Anschlusselementes mit einem einfachen flachen Träger bzw. Terminal. Diese sind im Vergleich zu den im Stand der Technik verwendeten und einen U-förmigen Träger aufweisenden Anschlusselementen kostengünstiger, da keine Biegeoperationen erforderlich sind und weniger Verschnitt anfällt.

Auch ist bei der Verwendung eines Anschlusselementes mit einem flachen Träger ein Verbiegen von Seitenschenkeln nicht möglich, wie dies bei U-förmigen Trägern nach dem Stand der Technik möglich ist. Da die seitlichen Begrenzungsflächen eng an den diesen zugewandten seitlichen Flächen des flachen Trägers anliegen, ist zudem ausgeschlossen, dass einzelne Litzen der Leiter bei dem Schweißvorgang nicht erfasst werden.

Ferner ist es nicht erforderlich, dass der flache Träger eine spezielle Geometrie wie V-Geometrie aufweisen muss. Vielmehr weist der Träger erfindungsgemäß eine Flachquader-Geometrie, also in Draufsicht eine Rechteckgeometrie auf.

Um auch die Möglichkeit zu schaffen, Leiter wie Litzen mit im Vergleich zur Flächenerstreckung des Trägers wie Terminals kleinem Gesamtquerschnitt sicher zu verbinden, sieht ein eigenerfinderischer Vorschlag vor, dass die elektrischen Leiter wie Litzen als vorverdichtete und/oder -verschweißte Einheit mit dem Träger verschweißt werden. Dabei ist insbesondere vorgesehen, dass die im Schnitt vorzugsweise eine Rechteckform aufweisenden vorverdichteten bzw. vorverschweißten bzw. verschweißten Leiter in den Verdichtungsraum eingebracht, sodann auf die entsprechende Einheit der Träger positioniert und anschließend ein Verschweißen der Einheit mit dem Träger durch Relativbewegung der ersten Elektrode zu der Gegenelektrode und Schwingungserregung der ersten Elektrode verschweißt werden.

Aufgrund der in der ersten Sequenz erfolgenden Verschweißung der Litzen besteht die Möglichkeit, die Leiter an gewünschten Positionen des Trägers anzuschweißen bzw. Leiter mit einem geringen Gesamtquerschnitt mit dem Träger zu verschweißen, wobei dieser gegebenenfalls im Schnitt eine U-Geometrie aufweisen kann. Dabei können die Seitenschenkel, die sich entlang des Litzengebildes erstrecken, eine Länge aufweisen, die größer als Höhe von zwischen den Schenkeln zunächst nicht verschweißten Litzen wäre. wodurch nach dem Stand der Technik ein Verschweißen nicht möglich wäre.

Aufgrund der erfindungsgemäßen Lehre werden die Litzen jedoch zunächst zu einem Litzengebilde verschweißt, das eine Höhe aufweist, die die Seitenschenkel höhenmäßig überragt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: einen im Querschnitt veränderbaren Verdichtungsraum einer Ultraschallschweißvorrichtung in einer ersten Stellung,
- Fig. 2: den Verdichtungsraum gemäß Fig. 1 in einer zweiten Stellung,
- Fig. 3: den Verdichtungsraum gemäß der Fig. 1 und 2 in einer dritten Stellung,
- Fig. 4: eine weitere Ausführungsform eines im Querschnitt veränderbaren Verdichtungsraums einer Ultraschallschweißvorrichtung,
- Fig. 5: eine weitere Ausführungsform eines in seinem Querschnitt veränderbaren Verdichtungsraums einer Ultraschallschweißvorrichtung,
- Fig. 6: in perspektivischer Darstellung ein elektrisches Anschlusselement mit angeschweißten Litzen, der nicht im Gegenstand der Ansprüche steht,
- Fig. 7: einen Schnitt entlang der Linie VI-VI in Fig. 6,
- Fig. 8: eine Prinzipdarstellung einer Ultraschallschweißanordnung,
- Fig. 9: eine Prinzipdarstellung einer Anordnung von Litzengebilde und Träger vor dem Verschweißen,
- Fig. 10: die Anordnung gemäß Fig. 9 während des Verschweißens,
- Fig. 11: eine der Fig. 9 entsprechende Darstellung mit anders gestaltetem Träger und
- Fig. 12: eine der Fig. 10 entsprechende Darstellung.

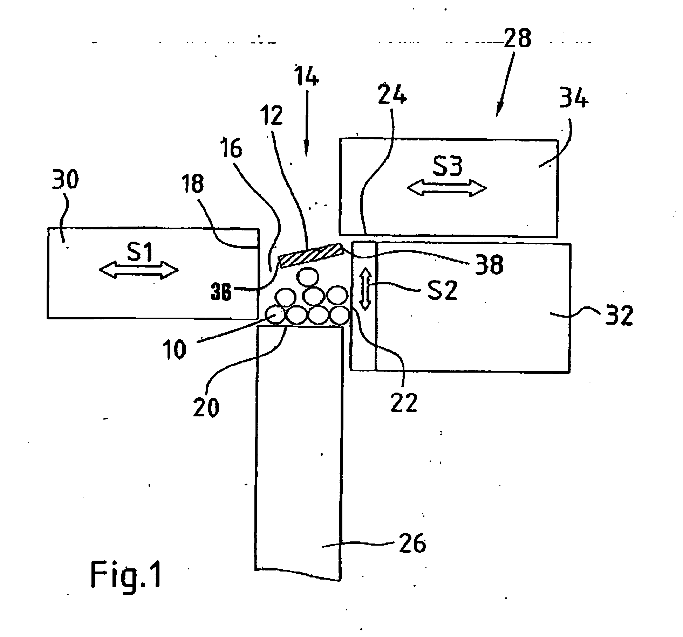

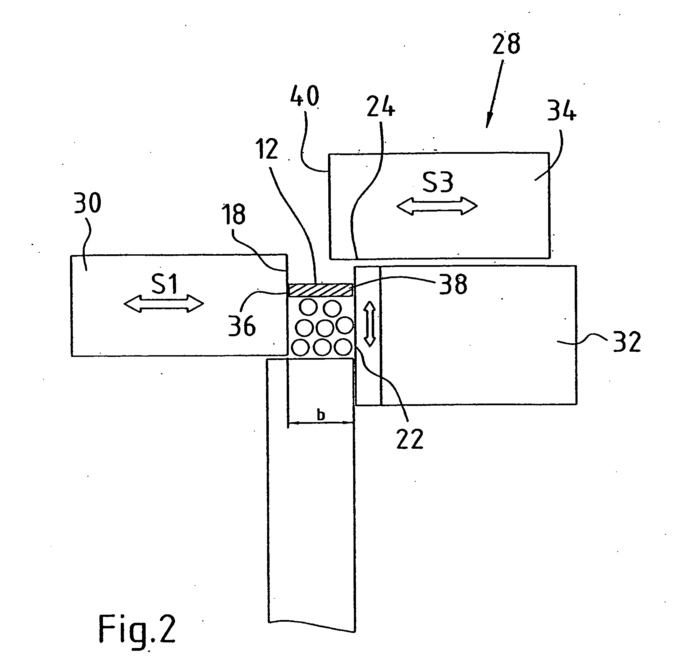

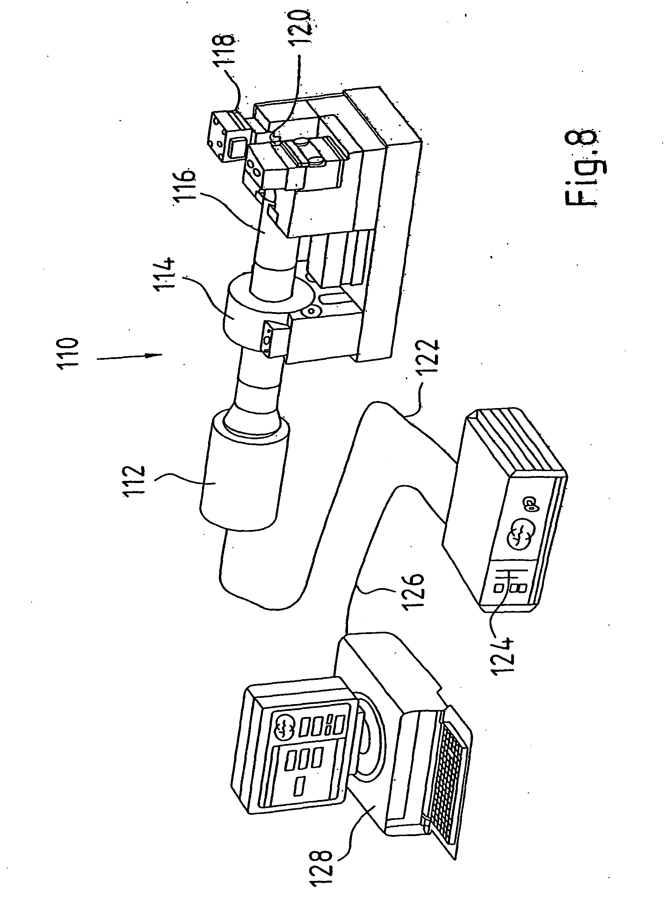

In Fig. 8 ist rein prinzipiell eine Anordnung dargestellt, mit der elektrische Leiter mit einem eigensteifen flächigen Träger mittels Ultraschall verschweißt werden. Die Anordnung umfasst eine Ultraschallschweißvorrichtung oder -maschine 110, die in gewohnter Weise einen Konverter 112, gegebenenfalls einen Booster 114 sowie eine Sonotrode 116 umfasst. Der Sonotrode 116 bzw. eine Fläche dieser sind eine mehrteilige Gegenelektrode 118 -auch Amboss genannt- sowie ein Schieber 120 zugeordnet, wie dies der DE-C- 37 19 083 zu entnehmen ist, auf dessen Offenbarung ausdrücklich verwiesen wird. Die Sonotrode 116 bzw. deren Fläche, die Gegenelektrode 118 sowie der Schieber 120 begrenzen einen im Querschnitt verstellbaren Verdichtungsraum, der anhand der Fig. 1 - 5 näher erläutert wird. In den Verdichtungsraum werden die zu verschweißende Elemente eingebracht.

Der Konverter 112 ist über eine Leitung 122 mit einem Generator 124 verbunden, der seinerseits über eine Leitung 126 zu einem PC 128 führt, über den eine Steuerung des Schweißprozesses erfolgt und in den Schweißparameter bzw. Querschnitt bzw. Breite des Trägers sowie der mit diesem zu verschweißenden Leiter eingegeben bzw. entsprechend abgespeicherte Werte abgerufen werden können.

Der Fig. 1 ist im Ausschnitt eine prinzipiell der Fig. 8 zu entnehmende Ultraschallschweißvorrichtung dargestellt, soweit der Verdichtungsraum betroffen ist. Mittels der Ultraschallschweißvorrichtung wird eine mechanische und elektrisch leitende Verbindung von elektrischen Leitern 10 wie Litzen, die zuvor nicht zusammengedrückt sein müssen, mit einem flächigen eigensteifen einen Querschnitt Q_{T} aufweisenden Träger 12 hergestellt, der Abschnitt eines Anschlusselementes 14 wie Erdungskontakt oder Kabelschuh sein kann. Hierzu werden die Leiter 10 und der Träger 12 in einen Verdichtungsraum 16 eingebracht.

Der Verdichtungsraum 16 weist - sowohl im Querschnitt als auch im Längsschnitt - eine rechteckförmige Geometrie auf und ist stirnseitig offen, um das Kabel der Litzen herauszuführen.

Der Verdichtungsraum umfasst eine erste Begrenzungsfläche 20, die von einem Abschnitt einer Sonotrode 26 gebildet wird. Gegenüberliegend zu der Fläche 20 erstreckt sich eine zweite Begrenzungsfläche 24, die von einem die Funktion einer Gegenelektrode oder eines Ambosses 34 ausübenden Querhaupt gebildet wird, der im Ausführungsbeispiel der Fig. 1 bis 3 von einem Begrenzungselement 32 ausgeht

Seitlich wird der Verdichtungsraum 16 von einem als Schieber 30 zu bezeichnenden ersten Begrenzungselement begrenzt, der eine senkrecht zu der ersten Begrenzungsfläche 20 und der zweiten Begrenzungsfläche 24 verlaufende dritte Begrenzungsfläche 18 bildet. Die gegenüberliegende vierte Begrenzungsfläche 22 wird von dem ausschließlich senkrecht oder nahezu senkrecht zu der ersten Begrenzungsfläche 18 verschiebbaren Begrenzungselement 32 gebildet, das auch als zweites Begrenzungselement bezeichnet werden kann. Das zweite Begrenzungselement 32 und das Querhaupt 34 bilden demzufolge eine mehrteilige Gegenelektrode, wie diese aus dem Stand der Technik z. B. in Form der DE-C- 35 08 122 zu entnehmen ist, auf deren Offenbarung ausdrücklich Bezug genommen wird.

Die Bewegungsrichtung des Schiebers 30, des Begrenzungselementes 32 und des Ambosses 34 wird durch die Doppelpfeile S1, S2, und S3 symbolisiert.

Um die Leiter 10 mit dem Träger 12 zu verschweißen, werden diese in den Verdichtungsraum 16 eingelegt. Dabei ist der Verdichtungsraum 16 geöffnet. Hierzu ist der Amboss 34 bzw. das Querhaupt in der Zeichnung nach rechts verschoben, so dass der Verdichtungsraum 16 von oben zugänglich ist, ohne dass jedoch die Litzen 10 seitlich aus dem Verdichtungsraum 16 herausgleiten können; denn der Schieber 30 befindet sich mit seiner Begrenzungsfläche 18 im Wirkbereich der Begrenzungsfläche 18 der Sonotrode 26.

Das Verschweißen der Leiter 10 mit dem Träger 12 erfolgt in dem vorzugsweise stufenlos im Querschnitt verstellbaren Verdichtungsraum 16, wobei dieser in seiner Breite, also im Abstand zwischen der dritten und vierten Begrenzungsfläche 18, 22 auf die Breite des Trägers 12, also den lichten Abstand seiner Längsseitenränder 36, 38 einstellbar ist. Dabei wird der Schieber 30 zu dem das Querhaupt 34 (Gegenelektrode) tragenden zweiten Begrenzungselement 32 verstellt. Folglich wird nur der Schieber 30 parallel zur ersten Begrenzungsfläche 20 verstellt, wohingegen das zweite Begrenzungselement 32 senkrecht zu diesem, und zwar zum Absenken bzw. Anheben des Querhaupts 34 bewegt wird.

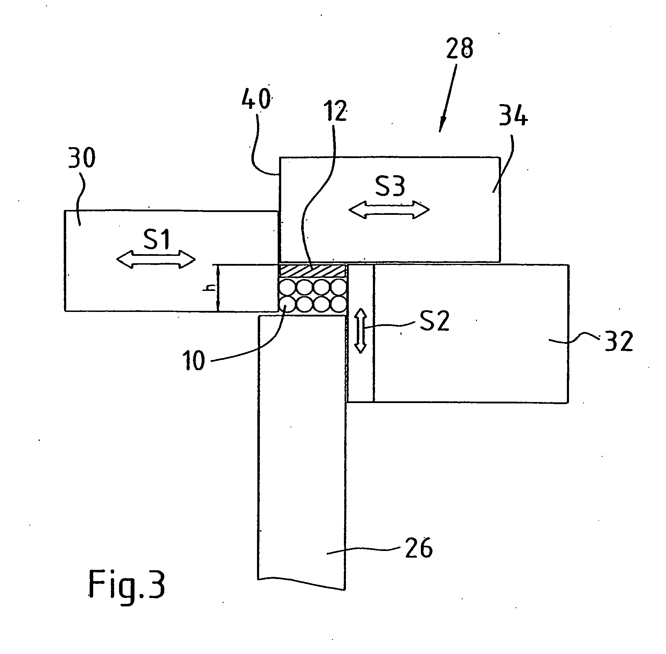

Gemäß der Erfindung werden zunächst die zu verschweißenden Leiter 10 in den Verdichtungsraum 16 eingelegt, also auf der ersten Begrenzungsfläche 20 positioniert. Sodann wird der Träger 12 eingebracht, wobei dessen flächige Erstreckung entlang, der ersten Begrenzungsfläche 20, also in etwa senkrecht zu der dritten und vierten Begrenzungsfläche 18, 22 verläuft. Der Seitenschieber 30 wird sodann in Richtung des zweiten Begrenzungselementes 32 in Richtung des Pfeils S1 in einem Umfang bewegt, dass der Abstand zwischen der dritten und vierten Begrenzungsfläche 18, 22 gleich oder geringfügig kleiner als der lichte Abstand zwischen den Längsseitenrändern 36, 38 des Trägers 12 ist. Dies kann automatisch erfolgen oder aber dadurch, dass beim Bewegen des Schiebers 30 der Träger 12 in Richtung des zweiten Begrenzungselementes 32 verschoben wird, so dass der Träger 12 von den Begrenzungsflächen 18 und 22 quasi erfasst wird, folglich deren Abstand dem lichten Abstand der Längsseitenränder 36, 38 des Trägers 12 entspricht. Sodann wird das zweite Begrenzungselement 32 entlang der Sonotrode 26 (Pfeilrichtung S2) verstellt. Gleichzeitig wird das Querhaupt oder der Amboss 34 in Richtung der dritten Begrenzungsfläche 18 verschoben, so dass der Verdichtungsraum 16 sich schließt, wie anhand der Fig. 3 ersichtlich wird.

Die Breite b des Verdichtungsraums wird entweder durch einen mechanischen Anschlag entsprechend der vorgegebenen Breite des Trägers 12 oder durch diesen selbst begrenzt. Folglich ist die Breite b des Verdichtungsraums 16 im Wesentlichen durch die Breite des Trägers 12 bestimmt.

Nachdem der Verdichtungsraum 16 geschlossen ist, wird das Begrenzungselement 32 und somit der Amboss 34 in Richtung der Sonotrode 26 verstellt. Dies kann z. B. pneumatisch erfolgen. Dabei erfolgt ein Verdichten der Leiter 10. Nach Abschluss der Verdichtung weist der Verdichtungsraum 16 eine Höhe h auf. Die Höhe h kann mittels eines dem zweiten Begrenzungselement 32 zugeordneten Wegaufnehmers bestimmt werden, um sodann unter Zugrundelegung des Höhenmaßes oder einer anderen charakteristischen Größe des Verdichtungsraums 16 zuvor abgelegte Schweißparameter wie Schweißenergie, Schweißamplitude, Schweißzeit und Schweißdruck abzurufen, um bei Ultraschallerregung der Sonotrode 26 und über den Amboss 34 erfolgende Krafteinwirkung auf die Leiter 10 und den Träger 12 bei gleichzeitiger Verringerung der Höhe h die Leiter 10 mit dem Träger 12 zu verschweißen. Nach Abschluss des Schweißprozesses wird der Amboss 34 zurückgefahren (angehoben). Entsprechend der zeichnerischen Darstellung wird der Schieber 30 in Richtung links bewegt. Sodann kann die Schweißverbindung bestehend aus den Leitern 10 und dem Träger 12 aus dem Verdichtungsraum 16 herausgenommen werden.

Der Querschnitt der in den Verdichtungsraum 16 eingelegten Leiter 10 sollte dabei derart ausgelegt sein, dass der Gesamtquerschnitt der mit dem Träger 12 verschweißten Leiter dem oder in etwa dem des Trägers 12 entspricht.

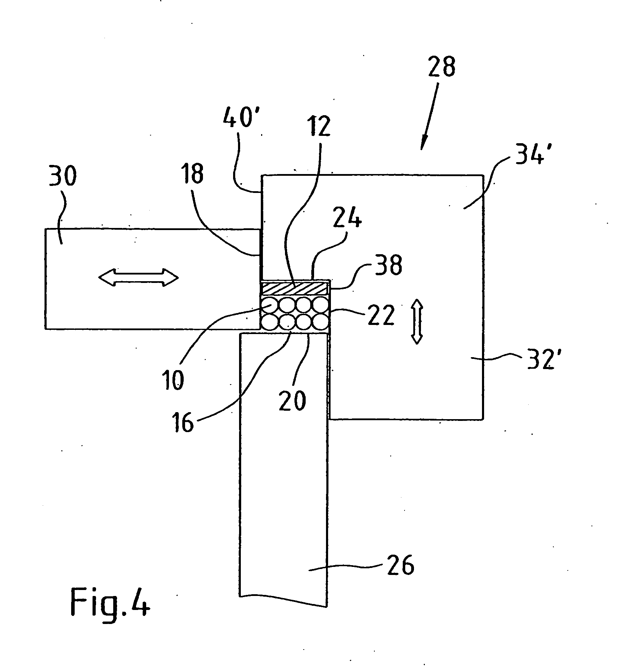

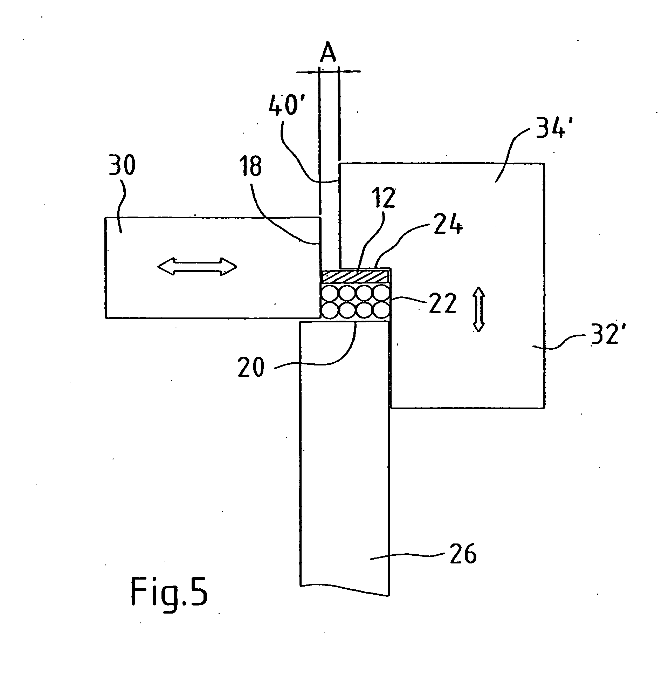

Den Fig. 4 und 5 sind weitere Ausführungsformen von Verdichtungsräumen von Ultraschallschweißvorrichtungen zu entnehmen, um entsprechend der erfindungsgemäßen Lehre die Leiter 10 mit einem eigensteifen flächigen Träger 12 zu verschweißen.

Abweichend vom Ausführungsbeispiel der Fig. 1 und 3 sind in Fig. 4 und 5 Amboss 34' und zweites Begrenzungselement 32' einteilig ausgebildet. Dabei ist der in Richtung des Schiebers 30 vorspringende Abschnitt des Amboss 34' auf die Breite des einzustellenden Verdichtungsraums 16 abgestellt, also dem lichten Abstand der Längsseitenränder 36, 38 des Trägers 12. Der Verfahrensablauf zum Verschweißen der Leiter 10 mit dem Träger 12 erfolgt sodann in zuvor beschriebener Weise.

Das erfindungsgemäße Verfahren ist jedoch auch realisierbar, wenn der entlang der Sonotrode 26 vorspringende Bereich des Ambosses 34' geringer als lichter Abstand der Längsseitenränder 36, 38 des Trägers 12 ist, wie sich anhand der Fig. 5 ergibt. Allerdings sollte der vorspringende, mit dem zweiten Begrenzungselement 32' eine Einheit bildende Abschnitt des Amboss 34' eine Erstreckung aufweisen, die sicherstellt, dass beim Verschweißen der Leiter 10 mit dem Träger 12 dieser nicht in dem Verdichtungsraum 16 wegkippen kann.

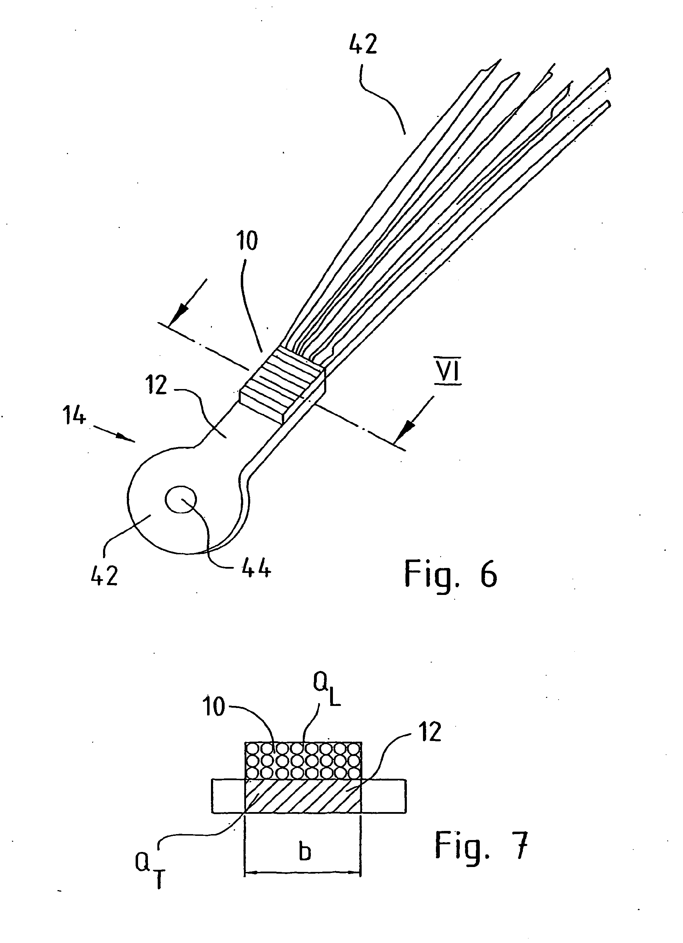

Fig. 6 zeigt eine perspektivische Ansicht es einen flachen Träger 12 aufweisenden Anschlusselementes 14 (, der nicht im Gegenstand der Erfindung steht), an dem Leiter 10 elektrischer Leitungen 42 verschweißt sind.

Fig. 7, in der ein Querschnitt entlang der Schnittlinie VI gemäß Fig. 6 dargestellt ist, zeigt, dass der Querschnitt der Schweißverbindung, insbesondere Ultraschall- oder Widerstandsschweißverbindung im Wesentlichen rechteckförmig ausgebildet ist, wobei die Breite des Querschnitts durch die Breite b des Trägers 12 vorgegeben bzw. bestimmt ist.

Das Anschlusselement 14 ist vorzugsweise als flaches Stanzelement aus einem leitenden Metall wie Kupfer ausgebildet, wobei der flache Träger 12 einen Querschnitt **Q_{T}** derart aufweist, dass dieser im Wesentlichen dem von den Leitern 10 in kompaktiertem Zustand gebildeten Querschnitt Q_{L} entspricht. Das erfindungsgemäße Verfahren kann sowohl bei Anschlusselementen mit Isolationskrimp als auch bei Anschlusselementen ohne Isolationskrimp angewendet werden.

Bei Verwendung eines Anschlusselementes 14 ohne Isolationskrimp kann die Übergangsstelle zwischen flachem Träger 12 und den Leitungen 42 mittels eines Schrumpfschlauchs isoliert und abgedichtet werden. Der Schrumpfschlauch dient zur Isolation, ggf. wasserdichten Isolation und kann zudem Quer- und Längskräfte optimal aufnehmen. Der Schrumpfschlauch kann zudem mit einer Füllmasse wie Schmelzkleber ausgefüllt sein.

Es besteht z. B. auch die Möglichkeit, die Schweißverbindung mittels eines den Träger umschließenden Kabelbinders zu sichern.

Gegenüber dem Stand der Technik zeichnet sich das erfindungsgemäße Verfahren insbesondere dadurch aus, dass zur Kontaktierung einfache und flache Anschlusselemente eingesetzt werden können, die in ihrer Herstellung kostengünstig sind, da keine Biegeoperationen erforderlich und weniger Verschnitt anfällt, wie dies beispielsweise bei den U-förmigen Anschlussklemmen nach dem Stand der Technik der Fall war. Auch besteht die Möglichkeit, eine Anschlussfahne 42 mit Bohrung 44 des Anschlusselementes 14 partiell mit einem Überzug wie beispielsweise Zinn zu versehen.

Im Vergleich zum Stand der Technik ist der Querschnitt Q_{T} des flachen Abschnitts 12 des Anschlusselementes vergrößert, um einerseits eine mechanische Stabilität und andererseits eine gute elektrische Leitfähigkeit zu erreichen. Auch können Verstärkungsrippen im Übergang zwischen dem flachen Träger 12 und der Anschlussfahne 42 vorgesehen sein.

Als besonderer Vorteil ist jedoch hervorzuheben, dass das beschriebene Verfahren mit Standard-Litzenschweißmaschine möglich ist, welche nach dem Stand der Technik zur Durchführung von End- und Durchgangsknoten verwendet wurden. Somit ist auch ein Einsatz in Endmontagen beispielsweise von kundenspezifischen Kabelbäumen möglich, wobei unterschiedliche Litzenkombinationen sowie unterschiedliche Anschlussbreiten von flachen Trägern verwendet werden, ohne dass ein Werkzeugtausch erfolgen muss.

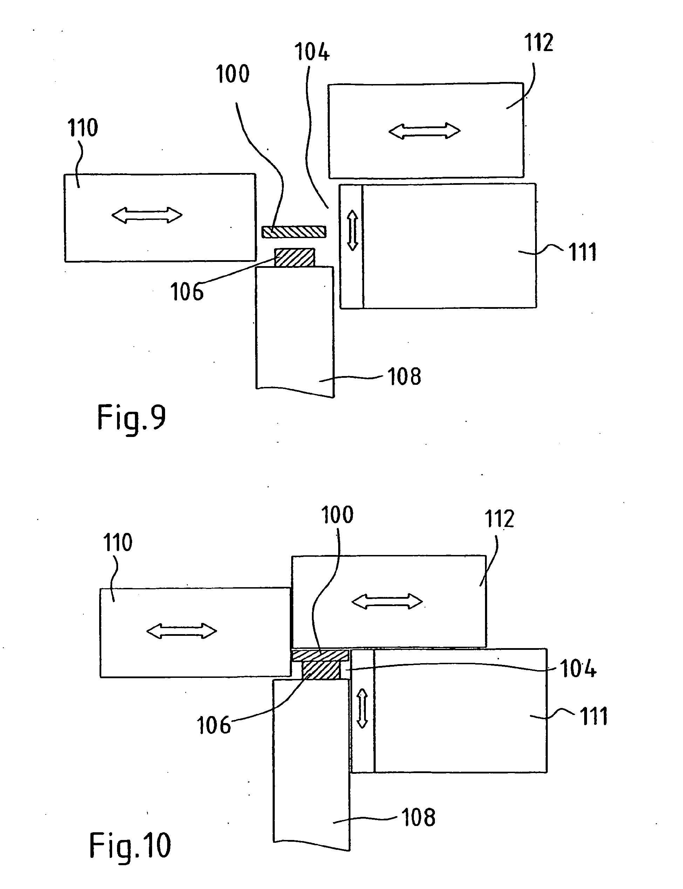

Den Fig. 9 bis 12 ist ein eigenerfinderischer Vorschlag zum Verschweißen von Leitern wie Litzen mit einem Kontaktstück (Träger) zu entnehmen. Dabei wird abweichend von den zuvor erläuterten Ausführungsbeispielen ein Kontaktstück 100, 102 nicht mit lose in einen Verdichtungsraum 104 einer Ultraschallschweißvorrichtung einbringbaren Litzen verschweißt, sondern mit einem verdichteten bzw. verschweißten Litzengebilde 106, das in dem Ausführungsbeispiel im Schnitt eine Rechteckform aufweist. Durch diese Maßnahmen ergibt sich der Vorteil, dass Litzen mit einem relativ geringen Gesamtquerschnitt auch mit einem großflächigen Träger bzw. an einer gewünschten Position des Trägers verschweißbar sind, ohne dass Einbußen bezüglich der Kontaktierung und der Verbindungsfestigkeit in Kauf genommen werden müssen.

So ist anhand der Fig. 9 erkennbar, dass die zu einer Einheit verdichteten bzw. verschweißten Litzen zunächst in den Verdichtungsraum 104 eingebracht werden, der in gewohnter Weise von einer Sonotrode 108, einem Seitenschieber 110, einem Träger 111 eines Ambosses 112 und diesen selbst begrenzt ist. Dabei ist der Verdichtungsraum 104 zunächst offen, so dass der Amboss 112 im Ausführungsbeispiel auf den Träger 111 nach rechts verstellt ist. Nachdem das Litzengebilde 106 auf der Sonotrode 108 platziert und sodann das Kontaktstück 100 in den Verdichtungsraum 104 eingebracht ist, wird der Seitenschieber 110 in Richtung des Trägers 111 verstellt, so dass lichter Abstand zwischen den entsprechenden Begrenzungsflächen des Seitenschiebers 110 und des Trägers 111 gleich oder in etwa gleich Abstand der Längsseitenränder des Kontaktstücks 100 ist. Sodann wird der Träger 111 zusammen mit dem Amboss 112 in Richtung der Sonotrode 108 verstellt. Dabei ist der Amboss 112 zunächst in Richtung des Seitenschiebers 110 verstellt worden und wird entlang dessen den Verdichtungsraum 104 begrenzender Seitenfläche bewegt. Die geschlossene Stellung des Verdichtungsraums 104 während des Verschweißens des Kontaktstücks 100 mit den Litzen bzw. dem Litzengebilde 106 ist der Fig. 10 zu entnehmen.

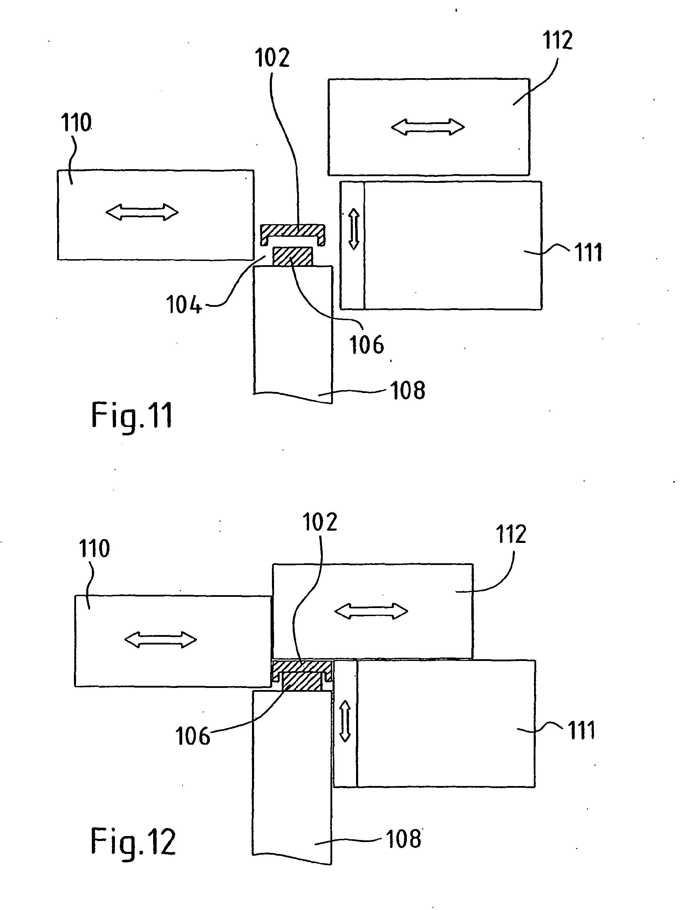

Die den Fig. 11 und 12 zu entnehmende Ausführungsform entspricht prinzipiell der der Fig. 9 und 10, so dass für gleiche Elemente gleiche Bezugszeichen benutzt werden.

Abweichend von den Darstellungen der Fig. 9 und 10 weist das Kontaktstrück 100 keine Platten- oder Scheibenform, also im Schnitt eine Rechteckgeometrie auf, sondern ist - wie dies bei Terminals häufig der Fall ist - U-förmig ausgebildet. Ungeachtet dessen besteht jedoch aufgrund der erfindungsgemäßen Lehre ohne Weiteres die Möglichkeit, das Kontaktstück 102 auch mit Litzen mit einem geringen Gesamtquerschnitt zu verschweißen, da die Litzen zuvor zu dem Litzengebilde 106 verdichtet bzw. verschweißt werden. Hierdurch ist sichergestellt, dass die Höhe des Litzengebildes 106 größer als wirksame Seitenschenkellänge des Kontaktstücks 102 mit der Folge ist, dass ein einwandfreies Verschweißen der Litzen mit dem Kontaktstück 102 möglich ist, wie dies anhand der Fig. 12 verdeutlicht wird.

## Patentansprüche

1. Verfahren zum Herstellen einer Schweißverbindung zwischen elektrischen Leitern (10) wie Litzen mit einem flächigen eigensteifen Träger (12) wie einem elektrischen Anschlusselement oder einem Abschnitt eines solchen, insbesondere Abschnitt eines Erdungskontakts, Kontaktmessers oder Kabelschuhs, wobei die Leiter (10) mit dem Träger (12) in einem von vier Begrenzungsflächen (18, 20, 22, 24) begrenzten im Querschnitt vorzugsweise rechteckförmigen Verdichtungsraum verschweißt werden, der beim Schweißen in seinem Querschnitt verkleinert wird, wobei eine erste Begrenzungsfläche (20) von einer ersten Elektrode (26) wie Sonotrode, ein parallel oder in etwa parallel zu der ersten Begrenzungsfläche (20) verlaufende zweite Begrenzungsfläche (24) von einer zu der ersten Elektrode verstellbarem Gegenelektrode (34) wie Amboss und verbleibende dritte (18) und vierte (22) Begrenzungsflächen von einem ersten(30) und einem zweiten Begrenzungselement (32) gebildet werden, die relativ zu der ersten Elektrode (26) verstellt werden,
**dadurch gekennzeichnet,**
**dass** als Träger ein solcher verwendet wird, der parallel oder nahezu parallel zueinander verlaufende Längsseitenräuder aufweist, dass der Verdichtungsraum in seinem Querschnitt dadurch verändert wird, dass das erste Begrenzungselement (30) mit Spalt entlang der ersten Begrenzugsfläche (20) in Richtung des als Halterung für die Gegenelektrode (34) auggebildeten zweiten Begrenzungselements (32) verstellt wird, das seinerseits unter Einhaltung eines Spalts ausschließlich senkrecht oder nahezu senkrecht zu der ersten Begrenzungsfläche (20) verstellt wird, dass bei geöffnetern und von der ersten Begrenzugsfläche (20), von der innerhalb des Wirkbereichs der ersten Begrenzungsfläche (20) verlaufenden dritten (18) Begrenzungsfläche und von der vierten Begrenzungsfläche (22) begrenzten Verdichtungsraum in diesen zunächst die Leiter (10) auf die erste Begrenzungsfläche (20) und sodann der träser (12) auf diese gelegt werden, wobei dessen flächige Erstreckung entlang der ersten Begrenzungsflache (20) also in etwa senkrecht zu der dritten (18) und vierten Begrenzunsfläche verlaüft, dass das erste Begrenzungselement (20) in Richtung des zweiten Begrenzungselements (32) derart verstellt wird, dass Abstand der dritten (38) und der vierten Begrenzungsfläche, (22) auf lichten Abstand zwischen den Längsseitenrändem des Trägers (12) abgestimmt wird und ass sodann die Gegenelektrode (34) in Richtung der ersten Elektrode (26) durch Verstellen des zweiten Begrenzungselements (32) verstellt wird.

2. Verfahren nach Anspruch 1,
**dadurch gekennzeichnet,**
**dass** als Träger (12) ein eben flächiges oder gekrümmt flächiges Element verwendet wird.

3. Verfahren nach Anspruch 1 oder 2,
**dadurch gekennzeichnet,**
**dass** die Litzen (10) unzusammengedrückt in den offenen Verdichtungsraum eingelegt werden.

4. Verfahren nach einem der vorhergehenden Ansprüche,
**dadurch gekennzeichnet,**
**dass** anschließend das entlang der ersten Begrenzungsfläche (20) verstellbare erste Begrenzungselement (30) entweder an zugewandten Längsseitenrand des Trägers (12) angefahren wird, wobei gegenüberliegender Längsseitenrand des Trägers (12) an der dritten Begrenzungsfläche (18) anliegt, oder bis auf einen Abstand zwischen der dritten Begrenzunlgsfläche (18) zu der vierten Begrenzungsfläche (22) verstellt wird, der gleich oder geringfügig kleiner als lichter Abstand zwischen den Längsseitenrändern des Trägers (12) ist.

5. Verfahren nach einem der vorhergehenden Ansprüche,
**dadurch gekennzeichnet,**
**dass** in den Verdichtungsraum Leiter (10) mit einem Gesamtquerschnitt eingebracht werden, dass Querschnitt der verdichteten und mit dem Träger (12) verschweißten Leiter (10) gleich oder in etwa gleich Querschnitt des Trägers ist.

6. Verfahren nach einem der vorhergehenden Ansprüche,
**dadurch gekennzeichnet,**
**dass** der Abstand zwischen der dritten (18) und der vierten Begrenzungsfläche (22) auf zuvor festgelegten Wert eingestellt wird, der auf den lichten Abstand der Längsseitenränder des Trägers (12) abgestimmt ist.

7. Verfahren nach einem der vorhergehenden Ansprüche,
**dadurch gekennzeichnet,**
**dass** der Abstand zwischen der dritten (18) und vierten (22) Begreuzungsfläche auf einen Wert derart eingestellt wird, dass der Träger (12) bei Krafteinwirkung durch die Gegenelektrode (34) in Richtung der Elektrode (26) bewegbar und parallel zu der vierten Begrenzungsfläche (22) ausgenchtet wird.

8. Verfahren nach einem der vorhergehenden Ansprüche,
**dadurch gekennzeichnet,**
**dass** der Verdichtungsraum stufenlos an die aus dem Träger (12) und den elektrischen Leitern (10) gebildete Geometrie anpassbar ist.

9. Verfahren nach einem der vorhergehenden Ansprüche,
**dadurch gekennzeichnet,**
**dass** das Verfahren folgende Verfahrensschritte aufweist:
- Verschieben des ersten Begrenzungselementes (30) in Richtung des zweiten Begrenzungselementes (32) bis auf einen Abstand b zwischen der dritten (18) und vierten (22) Begrenzungsfläche, wobei der Abstand b auf lichten Abstand zwischen den Längsseitenrändern des Trägers (12) abgestimmt wird,
- Kompaktieren der Leiter (10) zwischen dem Träger (12) und der ersten Elektrode (26) durch Absenken der Gegenelektrode (34) auf den Träger (12) und Kraftbeaufschlagen des Trägers (12) in Richtung der ersten Elektrode (26),
- Bestimmung der Höhe h oder Breite b oder zumindest einer anderen charakteristischen Größe des Verdichtungsraums nach Abschluss der Kompaklierung,
- Abrufen von abgelegten Schweißparametern unter Zugrundelegung der Höhe h oder Breite b bzw. der charakteristischen Größe des Verdichtungsraums,
- Verschweißung der kompaktierten Leiter (10) mit dem Träger (12) bei gleichzeitiger Veränderung des Abstands zwischen der ersten Elektrode (26) und der zweiten Elektrode (34),
- Öffnen des Verdichtungsraums durch Anheben der zweiten Elektrode (34) und Beabstanden des ersten Begrenzungselements (30) zu dem zweiten Begrenzungselement (32) und
- Entfernen der aus den mit dem Träger (12) verschweißten Leiter (10) gebildeten Schweißverbindung aus dem Verdichtungsraum.

10. Verfahren nach einem der vorhergehenden Ansprüche,
**dadurch gekennzeichnet,**
**dass** die Schweißparameter in Abhängigkeit des Querschnitts Q_{T} des Trägers (12) und/oder des Gesamtquerschnittes der Leiter (10) bestimmt bzw. ausgewählt werden.

11. Verfahren nach einem der vorhergehenden Ansprüche,
**dadurch gekennzeichnet,**
**dass** die elektrischen Leiter (10) wie Litzen als vorverdichtete und/oder vorverschweißte oder verschweißte Einheit mit dem Träger (12) verschweißt werden.

12. Verfahren nach einem der Ansprüche 1-11,
**dadurch gekennzeichnet,**
**dass** als Träger (102) ein solcher mit im Schnitt U-förmiger Geometrie verwendet wird, dessen Seitenschenkel entlang der Leiter (106) sich erstreckend ausgerichtet werden, wobei Querschnitt der sich zwischen den Seitenschenkeln erstreckenden Fläche vorzugsweise kleiner als Gesamtquerschnitt der Leiter (106) ist.

13. Verfahren nach einem der Ansprüche 1-12,
**dadurch gekennzeichnet,**
**dass** die Leiter (10) als vorverdichtete bzw. vorverschweißte bzw. verschweißte Einheit mit vorzugsweise rechteckformiger Geometrie in den Verdichtungsraum eingebracht, sodann auf die Einheit der Träger (12) positioniert und anschließend durch Relativbewegung der ersten Elektrode zu der Gegenelektrode und Schwingungserregung der ersten Elektrode die Einheit mit dem Träger verschweißt werden.

## Claims

1. Method for producing a welded joint between electric conductors (10) like strands with a flat rigid support (12) like an electrical connection element or a section thereof, in particular a section of a grounding contact, contact blade or cable shoe, whereas the conductors (10) are welded with the support (12) in a compression space of preferably rectangular cross section limited by four limiting surfaces (18, 20, 22, 24), said compression space being diminished in cross section on welding, whereas a first limiting surface (20) is formed by a first electrode (26) like a sonotrode, a second limiting surface (24) being parallel or approximately parallel to the first limiting surface (20) by a counter electrode (34) like an anvil movable relative to the first electrode, and remaining third (18) and fourth (22) limiting surfaces by a first (30) and a second limiting element (32), which are moved relative to the first electrode (26),
**characterized in**
**that** a support is used that has parallel or approximately parallel longitudinal side edges,
**that** the compression space is modified in its cross section in that the first limiting element (30) with a gap along the first limiting surface (20) is moved in the direction of the second limiting element (32) designed as a mounting for the counter electrode (34), said second limiting element in turn, maintaining a gap, is moved, only vertically or approximately vertically relative to the first limiting surface (20),
**that**, when the compression space is opened and limited by the fist limiting surface (20), by the third (18) limiting surface running within the effective range of the first limiting surface (20), and by the fourth limiting surface (22), inside this the conductors (10) are at first positioned onto the first limiting surface (20) and then the support is positioned on these, whereas its flat extension runs along the first limiting surface (20), i.e. approximately at an angle to the third (18) and fourth limiting surface,
**that** the first limiting element (30) is moved in the direction of the second limiting element (32) such that the distance of the third (18) and fourth limiting surfaces (20) is adjusted for clearance between the longitudinal side edges of the support (12), and that consequently the counter electrode (34) is moved in the direction of the first electrode (26) by moving the second limiting element (32).

2. Method according to claim 1,
**characterized in**
**that** as support (12) is used a level flat or bent flat element.

3. Method according to claim 1 or 2,
**characterized in**
**that** the strands (10) are introduced into the open compression space non-crimped.

4. Method according to one of the preceding claims,
**characterized in**
**that** subsequently the first limiting element (30) movable along the first limiting surface (20) is either moved against facing longitudinal side edge of the support (12), whereas the opposite longitudinal side edge of the support (12) abuts the third limiting surface (18), or is moved by a distance between the third limiting surface (18) and the fourth limiting surface (22), which is similar to or slightly smaller than the clearance between the longitudinal side edges of the support (12).

5. Method according to one of the preceding claims,
**characterized in**
**that** conductors (16) with an overall cross section are introduced into the compression space, that cross section of the conductors (10) that are compressed and welded to the support (12) is similar or approximately similar to the cross section of the support.

6. Method according to one of the preceding claims,
**characterized in**
**that** the distance between the third (18) and the fourth limiting surface (22) is adjusted to a predefined value, which is adjusted to the clearance of the longitudinal side edges of the support (12).

7. Method according to one of the preceding claims,
**characterized in**
**that** the distance between the third (18) and the fourth (22) limiting surface is adjusted to a value such that the support (12) is movable by application of force by the counter electrode (34) in the direction of the electrode (26) and parallel to the fourth limiting surface (22).

8. Method according to one of the preceding claims,
**characterized in**
**that** the compression space can be adjusted continuously variable to the geometry formed by the support (12) and the electric conductors (10).

9. Method according to one of the preceding claims,
**characterized in**
**that** the method includes the following steps:
• moving the first limiting element (30) in the direction of the second limiting element (32) up to a distance b between the third (18) and fourth (22) limiting surfaces, whereas the distance b is adjusted to the clearance between the longitudinal side edges of the support (12),
• compacting the conductors (10) between the support (12) and the first electrode (26) by lowering the counter electrode (34) onto the support (12) and force impingement of the support (12) in the direction of the first electrode (26),
• determination of the height h or width b or at least one other characteristic dimension of the compression space after compacting is concluded,
• retrieving stored welding parameters on the basis of the height h or width b and/or the characteristic dimension of the compression space,
• welding the compacted conductors (10) with the support (12) with simultaneous change of distance between the first electrode (26) and the second electrode (34),
• opening the compression space by lifting the second electrode (34) and spacing the first limiting element (30) from the second limiting element (32), and
• removing from the compression space the welded joint formed by the conductor (10) welded with the support (10).

10. Method according to one of the preceding claims,
**characterized in**
**that** the welding parameters are determined and selected, respectively, as a function of the cross section Q_{T} of the support (12) and/or the overall cross section of the conductors (10).

11. Method according to one of the preceding claims,
**characterized in**
**that** the electric conductors (10) such as strands are welded with the support (12) as a precompressed and/or prewelded or welded unit.

12. Method according to one of claims 1-11,
**characterized in**
**that** as support (102) is used one with a U-shaped geometry in section, whose lateral sides are oriented such that they extend along the conductors (106), with the cross section of the surface that extends between the side legs being preferentially smaller than the overall cross section of the conductors (106).

13. Method according to one of claims 1-12,
**characterized in**
**that** the conductors (10) are introduced into the compression space as a precompressed and/or prewelded and/or welded unit of preferably rectangular geometry, then the support (12) is positioned onto the unit, and subsequently the unit is welded with the support (102) by relative movement of the first electrode toward the counter electrode and oscillatory impulse of the first electrode.

## Revendications

1. Procédé pour réaliser un assemblage par soudure de conducteurs électriques (10), tels que des fils toronnés, avec un support mince à rigidité propre (12), tel qu'un élément de raccordement électrique ou une section de celui-ci, en particulier une section d'un contact de terre, d'une lame de contact ou d'une cosse de câble, sachant que les conducteurs (10) sont soudés avec le support (12) dans une chambre de compression de préférence rectangulaire limitée en coupe transversale par quatre faces de délimitation (18, 20, 22, 24) et dont la coupe transversale est réduite lors du soudage, et que sont formées une première face de délimitation (20) d'une première électrode (26) telle qu'une sonotrode, une deuxième face de délimitation (24) parallèle ou approximativement parallèle à la première face de délimitation (20) et appartenant à une contrélectrode (34) telle qu'une enclume mobile par rapport à la première électrode, ainsi qu'une troisième (18) et une quatrième (22) faces de délimitation restantes d'un premier (30) et d'un deuxième éléments de délimitation (32) qui sont déplacés relativement à la première électrode (26),
**caractérisé en ce**
**que** le support utilisé présente des bords de grand côté parallèles ou approximativement parallèles, que la coupe transversale de la chambre de compression est modifiée par le fait que le premier élément de délimitation (30) est déplacé avec un interstice le long de la première face de délimitation (20) en direction du deuxième élément de délimitation (32) formé comme fixation de la contrélectrode (34), qui de son côté, en respectant un interstice, est déplacé exclusivement perpendiculairement ou approximativement perpendiculairement par rapport à la première face de délimitation (20), que dans la chambre de compression ouverte et limitée par la première face de délimitation (20), par la troisième face de délimitation (18) s'étendant dans le champ d'action de la première face de délimitation (20) et par la quatrième face de délimitation (22), sont posés sur la première face de délimitation (20) tout d'abord les conducteurs (10) puis le support (12), sachant que sa partie plane s'étend le long de la première face de délimitation (20) à savoir approximativement perpendiculairement aux troisième (18) et quatrième faces de délimitation, que le premier élément de délimitation (30) est déplacé en direction du deuxième élément de délimitation (32) de telle sorte que la distance entre la troisième (18) et la quatrième face de délimitation (22) s'adapte à la distance intérieure entre les bords de grand côté du support (12), et qu'ensuite, la contrélectrode (34) est déplacée en direction de la première électrode (26) par déplacement du deuxième élément de délimitation (32).

2. Procédé selon la revendication 1,
**caractérisé en ce**
**qu'**un élément mince à surface plane ou à surface incurvée est utilisé comme support (12).

3. Procédé selon la revendication 1 ou 2,
**caractérisé en ce**
**que** les fils toronnés (10) sont posés sans être compressés dans la chambre de compression ouverte.

4. Procédé selon l'une des revendications précédentes,
**caractérisé en ce**
**qu'**ensuite le premier élément de délimitation (30) mobile le long de la première face de délimitation (20) est soit amené contre le bord de grand côté du support (12) lui faisant face, le bord de grand côté du support (12) s'appuyant sur la troisième face de délimitation (18), soit déplacé jusqu'à une certaine distance entre la troisième face de délimitation (18) et la quatrième face de délimitation (22), qui est égale ou légèrement inférieure à la distance interne entre les bords de grand côté du support (12).

5. Procédé selon l'une des revendications précédentes,
**caractérisé en ce**
**que** dans la chambre de compression sont placés des conducteurs (10) avec une coupe transversale d'ensemble, que la coupe transversale des conducteurs (10) compressés et soudés avec le support (12) est égale ou approximativement égale à la coupe transversale du support.

6. Procédé selon l'une des revendications précédentes,
**caractérisé en ce**
**que** la distance entre la troisième (18) et la quatrième faces de délimitation (22) est au préalable réglée sur une valeur ajustée sur la distance interne entre les bords de grand côté du support (12).

7. Procédé selon l'une des revendications précédentes,
**caractérisé en ce**
**que** la distance entre les troisième (18) et quatrième faces de délimitation (22) est réglée sur une valeur telle que, lors de l'application d'une force par la contrélectrode (34), le support (12) peut être déplacé en direction de l'électrode (26) et parallèlement à la quatrième face de délimitation (22).

8. Procédé selon l'une des revendications précédentes,
**caractérisé en ce**
**que** la chambre de compression peut s'adapter en continu au corps géométrique formé par le support (12) et les conducteurs électriques (10).

9. Procédé selon l'une des revendications précédentes,
**caractérisé en ce**
**que** le procédé est constitué des étapes suivantes :
- déplacement du premier élément de délimitation (30) en direction du deuxième élément de délimitation (32) jusqu'à une distance b entre la troisième (18) et la quatrième (22) faces de délimitation, la distance b étant ajustée sur la distance interne entre les bords de grand côté du support (12),
- compression des conducteurs (10) entre le support (12) et la première électrode (26) par abaissement de la contrélectrode (34) sur le support (12) et application d'une force sur le support (12) en direction de la première électrode (26),
- détermination de la hauteur h ou de la largeur b ou d'au moins d'une autre grandeur caractéristique de la chambre de compression après la fin de la compression,
- appel de paramètres de soudage enregistrés sur la base de la hauteur h ou de la largeur b ou de la grandeur caractéristique de la chambre de compression,
- soudage des conducteurs (10) compressés avec le support (12) avec modification simultanée de la distance entre la première électrode (26) et la seconde électrode (34),
- ouverture de la chambre de compression par relevage de la seconde électrode (34) et écartement du premier élément de délimitation (30) par rapport au deuxième élément de délimitation (32) et
- retrait de la chambre de compression de l'assemblage par soudure constitué par les conducteurs (10) soudés avec le support (12).

10. Procédé selon l'une des revendications précédentes,
**caractérisé en ce,**
**que** les paramètres de soudage sont définis ou sélectionnés en fonction de la coupe transversale Q_{T} du support (12) et/ou de la coupe transversale d'ensemble des conducteurs (10).

11. Procédé selon l'une des revendications précédentes,
**caractérisé en ce**
**que** les conducteurs électriques (10) tels que des fils toronnés sont soudés au support (12) sous forme d'unité précompressée et/ou présoudée ou soudée.

12. Procédé selon l'une des revendications 1 à 11,
**caractérisé en ce**
**que** le support (102) qui est utilisé a en coupe une géométrie en forme de U, dont les branches sont orientées pour s'étendre le long des conducteurs (106), sachant que la coupe transversale de la surface s'étendant entre les branches est de préférence inférieure à la coupe transversale d'ensemble des conducteurs (106).

13. Procédé selon l'une des revendications 1 à 12,
**caractérisé en ce**
**que** les conducteurs (10) sous forme d'unité précompressée ou présoudée ou soudée sont placés de préférence avec une géométrie rectangulaire dans la chambre de compression, puis le support (12) est positionné sur l'unité et ensuite, par un mouvement relatif de la première électrode par rapport à la contrélectrode et l'excitation oscillatoire de la première électrode, l'unité est soudée avec le support.
